# EUROPEAN PATENT APPLICATION

(11) **EP 4 836 103 A1**
(43) Date of publication of application: **04.11.2026**
(21) Application number: 24913613.6
(22) Date of filing: 17.12.2024
(51) Int. Cl.: H01M 50/105, H01M 50/126, H01M 50/159, H01M 50/16, H01M 50/131, B32B 7/025, B32B 15/085, B32B 15/20, B32B 27/08, B32B 7/12

(54) **METHOD FOR MANUFACTURING POUCH FILM, POUCH FILM, AND POUCH-TYPE BATTERY CASE COMPRISING SAME**

(30) Priority: 28.12.2023 KR 20230194084
(71) Applicant: Youlchon Chemical Co., Ltd., Seoul 07057 (KR)
(72) Inventor: JANG, Jee Eun, Ansan-si, Gyeonggi-do 15430 (KR); SONG, Nok Jung, Seoul 07057 (KR); HAN, Hee Sik, Ansan-si, Gyeonggi-do 15430 (KR); KIM, Hui Hun, Ansan-si, Gyeonggi-do 15430 (KR)
(74) Representative: Grünecker Patent- und Rechtsanwälte PartG mbB
(86) International application number: PCT/KR2024/020519
(87) International publication number: WO 2025/143670

(57) **Abstract**

Provided are a method for manufacturing a pouch film capable of manufacturing a pouch film having excellent high-temperature heat-sealing strength and insulation resistance by controlling an amount of a polyolefin-based elastomer introduced and a degree of dispersion thereof, and by simply controlling a degree of dispersion and an average particle diameter of the polyolefin-based elastomer through adjustment of a length of a mixing part of an extruder, and a pouch film in which chemical resistance and high-temperature stability may be improved because a polyolefin-based elastomer having an average particle diameter within a specific range is included in a certain amount.

## Description

### [Technical Field]

### CROSS-REFERENCE TO RELATED APPLICATION

This application claims the benefit of priority to Korean Patent Application No. 10-2023-0194084, filed in the Korean Intellectual Property Office on December 28, 2023, the entire contents of which are incorporated herein by reference.

### Technical Field

The present disclosure relates to a method for manufacturing a pouch film, a pouch film, and a pouch type battery case including the same.

### [Background Art]

A secondary battery is capable of repeated charging and discharging, and may be classified into a cylindrical secondary battery, a prismatic secondary battery, a pouch type secondary battery, and the like according to a structure and a manufacturing method thereof. Among these, a pouch type secondary battery includes a battery body part (e.g., an electrode, a separator, and/or an electrolyte) and a pouch film that encloses the battery body part, and is widely used in energy storage devices, such as automobile batteries, because a structure thereof is relatively simple and a capacity per unit volume thereof is relatively large.

As a method for enclosing the battery body part with the pouch film, generally, a method is used in which the battery body part is sealed by allowing innermost layers (e.g., sealant layers) of the pouch film to contact each other, and then applying heat and pressure to the innermost layers contacting each other to perform heat sealing, thereby forming a sealing part. In this way, a battery body part sealed by the pouch film substantially may not be exposed to an external environment.

Meanwhile, to prevent the battery body part from being exposed to an external environment, the pouch film is required to have an excellent sealing property, and particularly, is required to have an excellent sealing property retention characteristic under various environmental conditions. This is because, when the battery body part is exposed to an external environment, problems may occur, such as degradation of a function of the pouch type secondary battery or explosion.

Here, a sealing property of the pouch film and a retention characteristic thereof may be evaluated by a sealing strength of the pouch film. A sealing strength is an index that indicates excellence of a heat-sealing strength at a sealing part of the pouch film, and when the sealing strength of the pouch film is excellent, it may be considered that the sealing property of the pouch film is generally excellent.

Meanwhile, conventionally, it was difficult for the pouch film to secure a sufficient heat-sealing strength at the sealing part, and research for improving the heat-sealing strength at the sealing part was also at an insufficient level. It was difficult for the conventional pouch film to secure a sufficient sealing strength, and a problem in which a heat-sealed sealing part was opened (vented) frequently occurred. Accordingly, to solve such problems, researches for manufacturing a pouch film having improved chemical resistance and high-temperature stability, and particularly having excellent heat-sealing strength and insulation resistance at a high temperature, are being conducted.

### [Disclosure]

### [Technical Problem]

An aspect of the present disclosure provides a method for manufacturing a pouch film having excellent high-temperature heat-sealing strength and insulation resistance, a pouch film, and a pouch type secondary battery case including the same.

### [Technical Solution]

The present disclosure provides a method for manufacturing a pouch film, a pouch film, and a pouch type battery case including the same.
(1) The present disclosure provides a method for manufacturing a pouch film, the method including (S1) manufacturing a sealant layer by supplying a polyolefin-based resin and a polyolefin-based elastomer to an extruder, (S2) laminating the sealant layer on one surface of a barrier layer including aluminum, and (S3) laminating an outer layer on an opposite surface of the barrier layer, the polyolefin-based elastomer is supplied in an amount of 7 wt% or more and 30 wt% or less based on a total resin of the sealant layer, and the extruder includes a mixing part, and a length of the mixing part is 6% or more and 10% or less based on a total length of the extruder.
(2) In (1), the present disclosure provides a method, wherein S1 includes dispersing the polyolefin-based elastomer in the polyolefin-based resin by the mixing part.
(3) In (2), the present disclosure provides a method, wherein an average particle diameter of the polyolefin-based elastomer dispersed in the polyolefin-based resin is 30 nm or more and 150 nm or less.
(4) In any one of (1) to (3), the present disclosure provides a method, wherein S2 is performed by an extrusion lamination method.
(5) In (4), the present disclosure provides a method, further including an extrusion lamination coating layer including a polyolefin-based resin between the barrier layer and the sealant layer.
(6) In any one of (1) to (5), the present disclosure provides a method wherein the polyolefin-based resin includes at least one selected from the group consisting of polyethylene, polypropylene, polybutylene, a copolymer derived from a monomer derived from ethylene and/or propylene and a monomer derived from an alpha-olefin, and a mixture thereof.
(7) In any one of (1) to (6), the present disclosure provides a method, wherein the polyolefin-based elastomer is supplied in an amount of 10 wt% or more and 20 wt% or less based on a total resin of the sealant layer.
(8) The present disclosure provides a pouch film including an outer layer, a barrier layer including aluminum, and an inner layer laminated sequentially, wherein the inner layer includes a first sealant layer disposed on the barrier layer, and a second sealant layer disposed on the first sealant layer, wherein each of the first sealant layer and the second sealant layer independently includes a matrix resin, and a domain resin included in the matrix resin, a content of the domain resin in the second sealant layer is 10 wt% or more and 20 wt% or less based on a total resin of the second sealant layer, and an average particle diameter of the domain resin in the second sealant layer is 30 nm or more and 150 nm or less.
(9) In (8), the present disclosure provides a pouch film, wherein the average particle diameter of the domain resin in the second sealant layer is 50 nm or more and 125 nm or less.
(10) In (8) or (9), the present disclosure provides a pouch film, wherein the matrix resin includes a polyolefin-based resin.
(11) In any one of (8) to (10), the present disclosure provides a pouch film, wherein the domain resin includes at least one material selected from the group consisting of an ethylene-propylene copolymer (EPR)-based elastomer resin, an ethylene-butene copolymer (EBR)-based elastomer resin, an ethylene-hexene copolymer (EHR)-based polyolefin elastomer resin, an ethylene-octene copolymer (EOR)-based polyolefin elastomer resin, a propylene-butene copolymer (PBR)-based polyolefin elastomer resin, a propylene-hexene copolymer (PHR)-based polyolefin elastomer resin, a propylene-octene copolymer (POR)-based polyolefin elastomer resin, an LLDPE-based elastomer resin, and a thermoplastic polyurethane (TPU) elastomer resin.
(12) In any one of (8) to (11), the present disclosure provides a pouch film, wherein the outer layer includes polyethylene terephthalate.
(13) In any one of (8) to (12), the present disclosure provides a pouch film, wherein a heat-sealing strength under Condition 1 is 130 N/15 mm or more, and a heat-sealing strength reduction rate according to Equation 1 is 35% or less.

### [Condition 1]

A pouch film is heat-sealed between sealant layers under conditions of 200°C, 0.2 MPa, and 2 seconds, cut to a width of 15 mm to prepare a specimen, and the specimen is fixed between two jigs of a universal testing machine (UTM) under room-temperature conditions with an initial jig gap of 30 mm, after which a peel strength at a peel angle of 180° is measured at a peel rate of 50 mm/min [Equation 1] 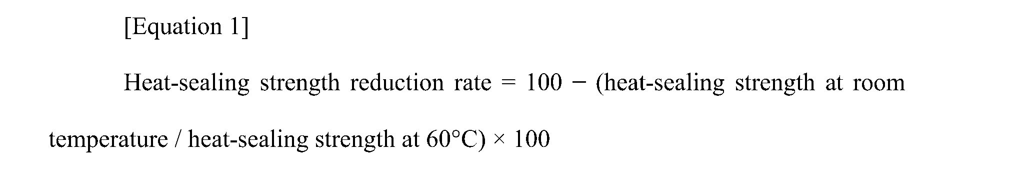 Heat-sealing strength reduction rate = 100 - (heat-sealing strength at room temperature / heat-sealing strength at 60°C) × 100
wherein in Equation 1,
the heat-sealing strength at room temperature is the peel strength measured under Condition 1, and
wherein the heat-sealing strength at 60°C is a peel strength measured at a peel angle of 180° and a peel rate of 50 mm/min after a pouch film is heat-sealed between sealant layers under conditions of 200°C, 0.2 MPa, and 2 seconds, cut to a width of 15 mm to prepare a specimen, and the specimen is fixed between two jigs of a universal testing machine (UTM) under a temperature condition of 60°C with an initial jig gap of 30 mm.

(14) The present disclosure provides a pouch type secondary battery case including the pouch film of any one of (8) to (13).

### [ Advantageous Effects]

According to the present disclosure, the method for manufacturing the pouch film may manufacture a pouch film having excellent high-temperature heat-sealing strength and insulation resistance by controlling an amount of the polyolefin-based elastomer introduced and a degree of dispersion thereof.

According to the present disclosure, the method for manufacturing the pouch film may simply control a degree of dispersion and an average particle diameter of the polyolefin-based elastomer by adjusting a length of a mixing part of the extruder.

According to the present disclosure, the pouch film may have improved chemical resistance and high-temperature stability because a polyolefin-based elastomer having an average particle diameter within a specific range is included in a certain amount.

### [ Description of Drawings]

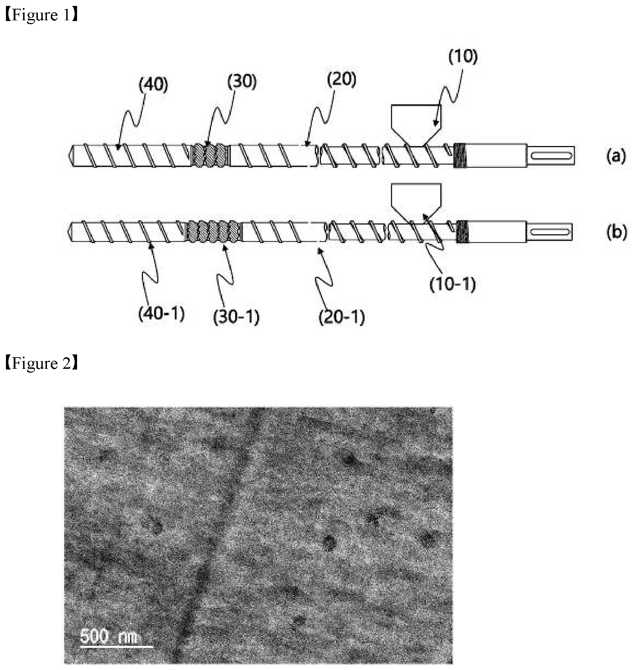

(a) of FIG. 1 is a schematic view of an extruder used for manufacturing a pouch film according to an embodiment, and (b) of FIG. 1 is a schematic view of an extruder used for manufacturing a pouch film according to a comparative example.
FIG. 2 is a TEM image of a surface of a sealant layer (CPP layer) in a pouch film of Embodiment 1 of the present disclosure.
FIG. 3 is a TEM image of a surface of a sealant layer (CPP layer) in a pouch film of Embodiment 2 of the present disclosure.
FIG. 4 is a TEM image of a surface of a sealant layer (CPP layer) in a pouch film of Embodiment 3 of the present disclosure.
FIG. 5 is a TEM image of a surface of a sealant layer (CPP layer) in a pouch film of Comparative Example 1 of the present disclosure.
FIG. 6 is a TEM image of a surface of a sealant layer (CPP layer) in a pouch film of Comparative Example 2 of the present disclosure.
FIG. 7 is a TEM image of a surface of a sealant layer (CPP layer) in a pouch film of Comparative Example 5 of the present disclosure.

### [ Mode for Invention]

Hereinafter, the present disclosure will be described in more detail to help understanding of the present disclosure. Then, terms or words used in the specification and claims should not be interpreted as being limited to ordinary or dictionary meanings, and should be interpreted as meanings and concepts that are consistent with the technical idea of this present disclosure based on the principle that the inventor may properly define the concepts of the terms to explain his or her invention in the best way.

The terms used herein are for the purpose of describing exemplary embodiments only, and are not intended to limit the present disclosure. Singular forms include plural forms unless interpreted otherwise in context.

It will be further understood that the terms "comprises," "comprising," "includes," and/or "including," when used herein, specify the presence of stated features, numbers, steps, components, or combinations thereof, but do not preclude the presence or addition of one or more other features, numbers, steps, components, or combinations thereof.

### Method for Manufacturing Pouch Film

The present disclosure provides a method for manufacturing a pouch film, including an operation (S1) of manufacturing a sealant layer by supplying a polyolefin-based resin and a polyolefin-based elastomer to an extruder, an operation (S2) of laminating the sealant layer on one surface of a barrier layer including aluminum, and an operation (S3) of laminating an outer layer on an opposite surface of the barrier layer, the polyolefin-based elastomer is supplied in an amount of 7 wt% or more and 30 wt% or less based on a total resin of the sealant layer, the extruder includes a mixing part, and a length of the mixing part is 6% or more and 10% or less based on a total length of the extruder.

The method for manufacturing a pouch film of the present disclosure includes an operation S1 of manufacturing a sealant layer by supplying a polyolefin-based resin and a polyolefin-based elastomer to an extruder. The sealant layer may be an innermost layer of the pouch film for an exterior of the secondary battery. That is, the sealant layer may directly contact a battery body part (e.g., an electrode, a separator, and/or an electrolyte). Accordingly, the sealant layer should have excellent electrolyte resistance and excellent insulation properties. To this end, the sealant layer may include at least a polyolefin-based resin.

Furthermore, the polyolefin-based resin may include, for example, a polyolefin derived from an olefin or a derivative thereof, a copolymer thereof, or a blend that includes at least one thereof. For example, the polyolefin-based resin may include at least one selected from the group consisting of polyethylene, polypropylene, polybutylene, a copolymer derived from monomers derived from ethylene and/or propylene and monomers derived from an α-olefin, and a blend thereof.

Furthermore, the sealant layer includes a polyolefin-based elastomer in addition to a polyolefin-based resin. The polyolefin-based elastomer modifies a surface of the sealant layer, and may change mechanical strength and chemical properties of the sealant layer. The polyolefin-based elastomer may serve as a domain resin in the sealant layer.

According to an embodiment of the present disclosure, the polyolefin-based elastomer is supplied to the extruder in an amount of 7 wt% or more and 30 wt% or less based on a total resin of the sealant layer. As an example, the polyolefin-based elastomer may be supplied to the extruder in an amount of 7 wt% or more, 8 wt% or more, 9 wt% or more, 10 wt% or more, 11 wt% or more, 12 wt% or more, 13 wt% or more, 14 wt% or more, 30 wt% or less, 27 wt% or less, 25 wt% or less, 23 wt% or less, 21 wt% or less, 20 wt% or less, 19 wt% or less, 18 wt% or less, 17 wt% or less, 16 wt% or less, or 15 wt% or less based on a total resin of the sealant layer. Specifically, the polyolefin-based elastomer may be supplied in an amount of 10 wt% or more and 20 wt% or less based on a total resin of the sealant layer. Contents of the polyolefin and the polyolefin-based elastomer, as materials supplied to the extruder in manufacturing the sealant layer, correspond to important factors for changing mechanical properties and chemical properties. When the supply amount of the polyolefin-based elastomer is outside a lower limit of the numerical range, heat-sealing strength and insulation resistance characteristics at a high temperature may be deteriorated. Furthermore, when the supply amount of the polyolefin-based elastomer is outside an upper limit of the numerical range, the heat-sealing strength may be improved, but the insulation resistance characteristics may be significantly deteriorated.

According to an embodiment of the present disclosure, the extruder may include a mixing part, and a length of the mixing part may be 6% or more and 10% or less based on a total length of the extruder. Furthermore, the operation S1 may include an operation of dispersing the polyolefin-based elastomer in the polyolefin-based resin by the mixing part.

Referring to FIG. 1, (a) of FIG. 1 schematically illustrates an extruder used for manufacturing a pouch film according to an embodiment, and (b) of FIG. 1 schematically illustrates an extruder used for manufacturing a pouch film according to a comparative example. In (a) of FIG. 1, it may be identified that a length of the mixing part is shorter than that in (b) of FIG. 1. The extruder may include a supply part 10, a melting part 20, a mixing part 30, and a measuring part 40. A method for manufacturing a sealant through the extruder is as follows. First, the polyolefin-based resin and the polyolefin-based elastomer are supplied to the supply part 10. Here, an average particle diameter of the supplied polyolefin-based elastomer may be 2 mm to 3 mm. Thereafter, a process of melting the supplied polyolefin-based resin and the supplied polyolefin-based elastomer is performed in the melting part 20. A screw bar is disposed in the melting part 20, so that a process of kneading the polyolefin-based resin and the polyolefin-based elastomer may be performed. After passing through the melting part 20, the polyolefin-based resin and the polyolefin-based elastomer may be transferred to the mixing part. The mixing part may perform a secondary kneading process such that the polyolefin-based elastomer may be dispersed as a domain resin in the polyolefin-based resin. In particular, because the degree of dispersion and the average particle diameter modify a surface of a sealant layer to be manufactured later and affect mechanical properties and chemical properties, it is important to control a length ratio of the mixing part such that the polyolefin-based elastomer in the polyolefin-based resin has a desired degree of dispersion and a desired average particle diameter.

A length of the mixing part 30 may be 6% or more and 10% or less based on a total length of the extruder. Specifically, the length of the mixing part may be 6.0% or more, 6.3% or more, 6.5% or more, 6.7% or more, 6.9% or more, 7.0% or more, 7.2% or more, 7.4% or more, 7.5% or more, 7.7% or more, 7.9% or more, 8.0% or more, 10.0% or less, 9.7% or less, 9.5% or less, 9.3% or less, 9.2% or less, 9.0% or less, 8.7% or less, 8.5% or less, 8.3% or less, 8.1% or less, 8.0% or less, 7.9% or less, 7.7% or less, or 7.5% or less based on a total length of the extruder. When the length ratio of the mixing part is outside an upper limit of the numerical range, dispersion of the polyolefin-based elastomer may be excessive, and the average particle diameter may be too small, so that a degree of surface modification of the manufactured sealant layer is insignificant and chemical resistance characteristics may be deteriorated. Furthermore, when the length ratio of the mixing part is outside a lower limit of the numerical range, dispersion of the polyolefin-based elastomer may not be performed smoothly, so that the heat-sealing strength may correspond to an inferior level.

The supply amount of the polyolefin-based elastomer and the length ratio of the mixing part are not independent conditions or factors, respectively, and are in an organic coupling relationship in which both should be satisfied to control dispersion and an average particle diameter of the polyolefin-based elastomer in the polyolefin-based resin. That is, the present invention should satisfy all of the above conditions to control dispersion and an average particle diameter of the polyolefin-based elastomer in the polyolefin-based resin, and a sealant layer manufactured therefrom and a pouch film including the same may have high chemical resistance and high-temperature stability.

According to an embodiment of the present disclosure, an average particle diameter of the polyolefin-based elastomer dispersed in the polyolefin-based resin may be 30 nm or more and 150 nm or less. As described above, an average particle diameter of the polyolefin-based elastomer initially supplied to the supply part 10 may be 2 mm to 3 mm. After passing through the melting part 20, as a kneading process and a dispersion process are performed in the mixing part, the polyolefin-based elastomer may be dispersed in the polyolefin-based resin to have an average particle diameter of 30 nm or more and 150 nm or less.

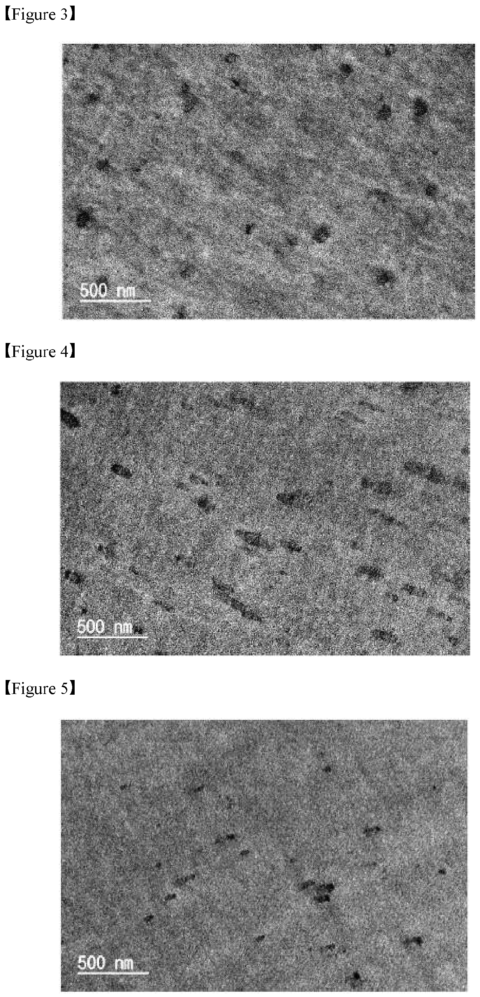

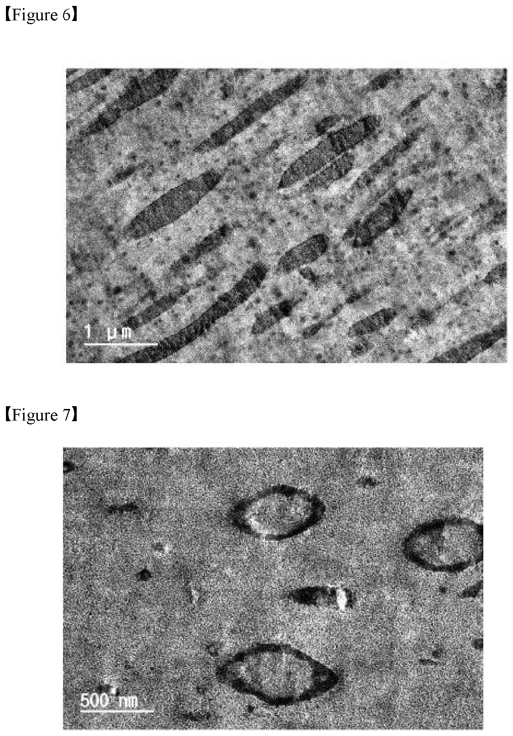

Specifically, the average particle diameter of the polyolefin-based elastomer dispersed in the polyolefin-based resin may be 30 nm or more, 31 nm or more, 33 nm or more, 35 nm or more, 37 nm or more, 39 nm or more, 40 nm or more, 42 nm or more, 45 nm or more, 47 nm or more, 49 nm or more, 50 nm or more, 51 nm or more, 53 nm or more, 55 nm or more, 57 nm or more, 59 nm or more, 60 nm or more, 61 nm or more, 63 nm or more, 65 nm or more, 67 nm or more, 69 nm or more, 70 nm or more, 71 nm or more, 150 nm or less, 149 nm or less, 147 nm or less, 145 nm or less, 143 nm or less, 141 nm or less, 140 nm or less, 137 nm or less, 135 nm or less, 133 nm or less, 131 nm or less, 130 nm or less, 127 nm or less, 125 nm or less, 123 nm or less, 120 nm or less, 117 nm or less, 115 nm or less, 113 nm or less, 110 nm or less, 107 nm or less, 105 nm or less, 103 nm or less, 100 nm or less, 98 nm or less, 95 nm or less, 93 nm or less, 91 nm or less, or 90 nm or less. When the average particle diameter of the polyolefin-based elastomer satisfies the numerical range, chemical resistance of the pouch film may be improved, and heat-sealing strength at a high temperature may be improved. The average particle diameter may be calculated by an arithmetic averaging method based on a major diameter of each domain resin, based on images measured through a transmission electron microscope (TEM). Specifically, FIG. 2 is a TEM image of a surface of the sealant layer (CPP layer) in the pouch film of Embodiment 1 of the present disclosure, FIG. 3 is a TEM image of a surface of the sealant layer (CPP layer) in the pouch film of Embodiment 2 of the present disclosure, FIG. 4 is a TEM image of a surface of the sealant layer (CPP layer) in the pouch film of Embodiment 3 of the present disclosure, FIG. 5 is a TEM image of a surface of the sealant layer (CPP layer) in the pouch film of Comparative Example 1 of the present disclosure, FIG. 6 is a TEM image of a surface of the sealant layer (CPP layer) in the pouch film of Comparative Example 2 of the present disclosure, and FIG. 7 is a TEM image of a surface of the sealant layer (CPP layer) in the pouch film of Comparative Example 5 of the present disclosure. An average particle diameter of each domain resin may be calculated by an arithmetic averaging method based on a major diameter of the domain resin shown in the TEM images.

The method for manufacturing a pouch film of the present disclosure includes an operation (S2) of laminating the sealant layer on one surface of a barrier layer including aluminum, and an operation (S3) of laminating an outer layer on an opposite surface of the barrier layer.

According to an embodiment of the present disclosure, the operation S2 may be performed by an extrusion lamination method. By way of example, a method for laminating the sealant layer on the barrier layer may be performed by an extrusion lamination (hereinafter, abbreviated as EC) method and a solvent-dry lamination (hereinafter, abbreviated as SDL) method.

The solvent-dry lamination method is a method, in which a barrier layer (a metal layer) is laminated on a polypropylene (PP) layer by using a solvent-based adhesive and the solvent-based adhesive is dried, and accordingly, a sealant layer manufactured thereby is formed of a polypropylene (PP) layer.

The extrusion lamination method is a method of extruding a polyolefin-based resin, preferably a polypropylene resin, when a polypropylene-based resin layer that is mainly used for a sealant layer, preferably an unstretched polypropylene (CPP) film, is laminated on a barrier layer (a metal layer). As a result, the sealant layer is formed of an extrusion lamination coating (EC) layer (mainly an extruded polypropylene layer) and a polypropylene (PP) layer resin, preferably an unstretched polypropylene (CPP) layer, disposed below the extrusion lamination coating (EC) layer (inside the pouch film). Here, the extrusion lamination coating layer may be a layer that further improves a function as an inner layer while assisting adhesion between the barrier layer and the unstretched polypropylene (CPP) layer, and the unstretched polypropylene (CPP) layer may be a layer that constitutes an innermost inner layer of the pouch film and performs a role of preventing leakage of a secondary battery, particularly a non-aqueous electrolyte, while simultaneously providing sealing.

According to the method for manufacturing the pouch film of the present disclosure, a pouch film that is manufactured by an extrusion lamination method and has improved chemical resistance, an excellent electrolyte resistance peel strength, and an excellent insulation resistance may be provided.

According to an embodiment of the present disclosure, when the sealant layer includes the extrusion lamination coating layer and the unstretched polypropylene layer, which are formed by the above-described extrusion lamination method, a ratio of a thickness of the unstretched polypropylene layer to a sum of a thickness of the extrusion lamination coating layer and the thickness of the unstretched polypropylene layer may be 1:0.5 to 0.99, 1:0.55 to 0.90, 1:0.57 to 0.79, or 1:0.60 to 0.72. Here, when the ratio of the thicknesses satisfies the above-described numerical range, a sufficient adhesion force with the barrier layer may be secured, and furthermore, a heat-sealing strength and an insulation resistance characteristic of the sealant layer may be further improved.

Meanwhile, the extrusion lamination coating layer may include a polyolefin-based elastomer resin in an amount of 15 wt% or more and 25 wt% or less based on a total resin content, and an average particle diameter of the polyolefin-based elastomer resin may be 80 nm to 85 nm. According to the present disclosure, in the method for manufacturing the pouch film, a chemical resistance and a high-temperature retention property may be improved by controlling a dispersion and an average particle diameter of an elastomer in the unstretched polypropylene layer while maintaining a dispersion and an average particle diameter of an elastomer in the extrusion lamination coating layer constant.

### Pouch Film

Hereinafter, the pouch film according to the present disclosure will be described. Descriptions that are common to those described in the above-described method for manufacturing the pouch film will be omitted.

The present disclosure provides a pouch film including an outer layer, a barrier layer including aluminum, and an inner layer that are sequentially stacked, wherein the inner layer includes a first sealant layer that is disposed on the barrier layer, and a second sealant layer that is disposed on the first sealant layer, wherein each of the first sealant layer and the second sealant layer independently includes a matrix resin, and a domain resin that is included in the matrix resin, wherein a content of the domain resin in the second sealant layer is 10 wt% or more and 20 wt% or less based on a total resin content of the second sealant layer, and an average particle diameter of the domain resin in the second sealant layer is 30 nm or more and 150 nm or less.

According to an embodiment of the present disclosure, the inner layer may be configured as a laminate of two or more layers in terms of diversifying functions. In a detailed example, the inner layer may include a first sealant layer disposed on the barrier layer, and a second sealant disposed on the first sealant layer. Here, the first sealant layer may be a layer that assists adhesion of the barrier layer and the second sealant layer, and may be a layer that further improves a function as the inner layer, and the second sealant layer may be a layer that constitutes an innermost inner layer of the pouch film laminate and performs sealing while preventing leakage of the secondary battery, particularly, leakage of a non-aqueous electrolyte. As described above, the first sealant layer may be an extrusion lamination coating (EC) layer (mainly an extruded polypropylene layer), and the second sealant layer may be a polypropylene (PP) layer resin disposed below the first sealant layer (inside with respect to the pouch film), and preferably may be an unstretched polypropylene (CPP) layer.

According to an embodiment of the present disclosure, provided is a pouch film in which an average particle diameter of the domain resin in the second sealant layer is 50 nm or more and 125 nm or less. As described above, the pouch film according to the present disclosure includes a matrix resin including a polyolefin-based resin and a domain resin including a polyolefin-based elastomer resin, and because a content of the domain resin satisfies the above-described numerical range and an average particle diameter of the domain resin satisfies the above-described numerical range, the pouch film may have a high chemical resistance property having excellent heat-sealing strength and insulation resistance characteristics, and may have a high-temperature stability.

According to an embodiment of the present disclosure, a pouch film, in which the matrix resin includes a polyolefin-based resin, is provided. Specifically, the matrix resin may be a polypropylene-based resin, and more specifically may be an unstretched polypropylene-based resin.

According to an embodiment of the present disclosure, a pouch film, in which the domain resin includes at least one material selected from the group consisting of an ethylene-propylene copolymer (EPR)-based elastomer resin, an ethylene-butene copolymer (EBR)-based elastomer resin, an ethylene-hexene copolymer (EHR)-based polyolefin elastomer resin, an ethylene-octene copolymer (EOR)-based polyolefin elastomer resin, a propylene-butene copolymer (PBR)-based polyolefin elastomer resin, a propylene-hexene copolymer (PHR)-based polyolefin elastomer resin, a propylene-octene copolymer (POR)-based polyolefin elastomer resin, an LLDPE-based elastomer resin, and a thermoplastic polyurethane (TPU, thermoplastic polyurethane) elastomer resin, is provided. Specifically, a polypropylene-based elastomer resin is more suitable for improving a chemical resistance and a high-temperature safety of the sealant film, and thus, the domain resin may include a polyolefin-based elastomer resin.

The outer layer may be an outermost layer of the pouch film, and may include a heat-resistant resin layer having a melting point greater than a heat-seal temperature of the sealant layer. The heat-resistant resin layer may include any one selected from the group consisting of polyimide, polyester, polyolefin, copolymers thereof, and blends thereof. Here, the outer layer may have a single-layered structure or a multilayer structure including at least one of the above-described materials.

The outer layer may have an appropriate thickness within a range in which sufficient mechanical strength and sufficient formability as an exterior material may be ensured. For example, a thickness of the outer layer may be 15 µm or more, 20 µm or more, 25 µm or more, or 35 µm or more, and 140 µm or less, 110 µm or less, 100 µm or less, 90 µm or less, 80 µm or less, 70 µm or less, 50 µm or less, or 40 µm or less. When the above range is satisfied, a dielectric breakdown voltage may be maintained at a high level.

According to an embodiment of the present disclosure, a pouch film, in which the outer layer includes polyethylene terephthalate, is provided. Specifically, the outer layer may be formed of a laminated film of nylon and polyethylene terephthalate (PET), and in this case, formability is more advantageous as a thickness of the PET film decreases and a thickness of the nylon film increases. However, as a thickness of the PET film decreases, it may be disadvantageous in terms of a dielectric breakdown voltage. From this viewpoint, by way of example, a thickness of the nylon layer may be 10 µm or more, 12 µm or more, 15 µm or more, or 20 µm or more, and 40 µm or less, 35 µm or less, or 30 µm or less, and a thickness of the PET layer may be 5 µm or more, 8 µm or more, or 10 µm or more, and 30 µm or less, 25 µm or less, or 20 µm or less.

The barrier layer may be an intermediate layer of the pouch film (e.g., a layer that is disposed between the outer layer and the sealant layer), and may serve to block intrusion of gas and/or moisture. The barrier layer is not particularly limited in type, but may include at least one selected from the group consisting of aluminum, stainless steel, copper, titanium, and alloys thereof, and preferably, may include aluminum.

The barrier layer may have an appropriate thickness within a range, in which a sufficient formability may be secured while effectively blocking penetration of the gas and/or moisture described above. By way of example, a thickness of the barrier layer may be 20 µm or more, 30 µm or more, 40 µm or more, 50 µm or more, 55 µm or more, or 60 µm or more, and 150 µm or less, 140 µm or less, 130 µm or less, 125 µm or less, 120 µm or less, 110 µm or less, 100 µm or less, or 90 µm or less.

The sealant layer may be an innermost layer of the pouch film. That is, the sealant layer may directly contact a battery body part (e.g., an electrode, a separator, and/or an electrolyte). Accordingly, the sealant layer should have excellent electrolyte resistance and excellent insulation properties. A thickness of the sealant layer may be, for example, 20 µm or more, 30 µm or more, 40 µm or more, or 50 µm or more, and 80 µm or less, 70 µm or less, or 60 µm or less, and when the above-described numerical range is satisfied, excellent electrolyte resistance and insulation properties may be achieved.

According to an embodiment of the present disclosure, a heat-sealing strength under Condition 1 below may be 130 N/15 mm or more, and a heat-sealing strength reduction rate according to Equation 1 may be 35% or less.

### [Condition 1]

A pouch film is heat-sealed between sealant layers under conditions of 200°C, 0.2 MPa, and 2 seconds, cut to a width of 15 mm to prepare a specimen, and the specimen is fixed between two jigs of a universal testing machine (UTM) under room-temperature conditions with an initial jig gap of 30 mm, after which a peel strength at a peel angle of 180° is measured at a peel rate of 50 mm/min. [Equation 1] 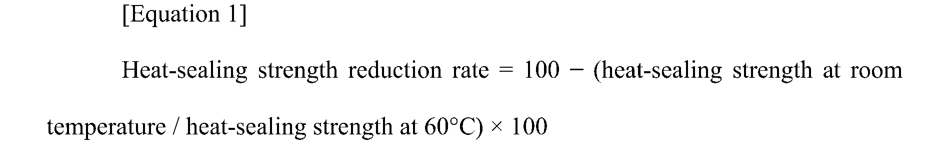 Heat-sealing strength reduction rate = 100 - (heat-sealing strength at room temperature / heat-sealing strength at 60°C) × 100
wherein in Equation 1,
the heat-sealing strength at room temperature is the peel strength measured under Condition 1, and
wherein the heat-sealing strength at 60°C is a peel strength measured at a peel angle of 180° and a peel rate of 50 mm/min after a pouch film is heat-sealed between sealant layers under conditions of 200°C, 0.2 MPa, and 2 seconds, cut to a width of 15 mm to prepare a specimen, and the specimen is fixed between two jigs of a universal testing machine (UTM) under a temperature condition of 60°C with an initial jig gap of 30 mm.

Here, the heat-sealing strength according to Condition 1 means a heat-sealing strength (sealing strength) under a room-temperature condition, and the heat-sealing strength reduction rate according to Equation 1 is based on a heat-sealing strength (sealing strength) at about 60°C, which is a temperature range increased by heat generation during operation of the secondary battery. Specifically, as the heat-sealing strength according to Condition 1 increases, the pouch film corresponds to a product having a more excellent sealing strength itself, and as a reduction rate of the heat-sealing strength according to Equation 1 decreases, it may be determined that a high-temperature stability and reliability of the heat-sealing strength at a high temperature are more excellent.

In the case of the pouch film according to the present disclosure, a heat-sealing strength at room temperature may be 130 N/15 mm or more, 131 N/15 mm or more, 132 N/15 mm or more, 134 N/15 mm or more, or 136 N/15 mm or more, and a heat-sealing strength reduction rate according to Equation 1 may be 35% or less, 33% or less, 32% or less, 30% or less, 29% or less, 27% or less, 25% or less, 23% or less, 21% or less, 20% or less, 19% or less, or 18% or less.

The present disclosure may provide a pouch type secondary battery case including the pouch film according to the present disclosure.

### Secondary Battery

The secondary battery according to the present disclosure includes a pouch type secondary battery case including the battery body part and the pouch film, wherein the battery body part is sealed by the pouch type secondary battery case. By way of example, the secondary battery may be a lithium secondary battery, and in this case, the battery body part may include an anode for a lithium secondary battery, a cathode for a lithium secondary battery, and an electrolyte.

The cathode for a lithium secondary battery may be used without limitation as long as it is commonly used as a cathode of a lithium secondary battery. For example, the cathode for a lithium secondary battery may include a cathode active material, such as LiCoO₂, LiMnO₂, LiFeO₂, Li(NiₓMn_{γ}Co*z*)O₂ (X+Y+Z=1), or LiNiCoAlO₂.

The electrolyte may include a lithium salt and a non-aqueous organic solvent. Here, the lithium salt and the non-aqueous organic solvent may be used without limitation as long as they are commonly used as a lithium salt and an organic solvent, respectively, for an electrolyte of a lithium secondary battery.

The anode for a lithium secondary battery may be used without limitation as long as it is commonly used as an anode of a lithium secondary battery. For example, the anode for a lithium secondary battery may include an anode active material, such as a carbon-based active material or a silicon-based active material.

The pouch type secondary battery case may have an excellent sealing strength characteristic. Accordingly, a problem in which the battery body part sealed by the pouch type secondary battery case is exposed to an external environment may not occur.

Hereinafter, embodiments of the present disclosure will be described in detail so that a person having an ordinary skill in the art, to which the present disclosure pertains, may easily practice the present disclosure. However, the disclosure may be embodied in many different forms and should not be construed as limited to the embodiments set forth herein.

### Examples and Comparative Examples

The pouch films of Examples and Comparative Examples were formed by laminating an outer layer, a barrier layer, and a sealant layer, wherein the outer layer used a laminated film of a polyethylene terephthalate (PET) film (thickness: 12 µm), which was the outermost layer, and a nylon (Ny) film (thickness: 25 µm), which was disposed inside the PET film, the barrier layer used aluminum (thickness: 60 µm), and the sealant layer (thickness: 80 µm) was formed such that it included a polypropylene extrusion coating (EC) layer (thickness: 30 µm) and an unstretched polypropylene film (CPP) (thickness: 50 µm). Here, the sealant layer was manufactured by the following method. The polypropylene resin and the polypropylene elastomer were introduced into the supply part 10 of the extruder. A kneading and dispersion process was performed by adjusting a length ratio of the mixing part in the extruder, and the polypropylene elastomer content and the length ratio of the mixing part for each of the Examples and Comparative Examples are illustrated in Table 1 below.

**[Table 1]**

| Classification | | Example 1 | Example 2 | Example 3 | Comparative Example 1 | Comparative Example 2 | Comparative Example 3 | Comparative Example 4 | Comparative Example 5 | Comparative Example 6 |
|---|---|---|---|---|---|---|---|---|---|---|
| Amount of polypropylene elastomer introduced (wt%) | EC layer (Average diameter) | 20% (80 to 82nm) | | | | | | | | |
| | CPP layer | 10% | 15% | 30% | 5% | 50% | 5% | 10% | 30% | 50% |
| Average particle diameter (nm) of polypropylene elastomer | CPP layer | 55 nm | 71 nm | 98 nm | 11 nm | >150 | 13 nm | 65 nm | 142 nm | >150 |
| Length ratio (%) of mixing part (mixing part length/total length of the extruder) × 100 | | 7.4% | 7.4% | 7.4% | 7.4% | 7.4% | 4.7% | 4.7% | 4.7% | 4.7% |
| Heat-sealing strength (0.2 MPa, 2 sec, R.T.) (N/15 mm) | | 131 | 136 | 134 | 115 | 124 | 110 | 121 | 145 | 134 |
| Heat-sealing strength (0.2 MPa, 2 sec, 60°C) (N/15 mm) | | 107 | 103 | 91 | 87 | 70 | 83 | 97 | 75 | 52 |
| Heat-sealing strength reduction rate (%) | | 18.3 | 24.2 | 32.1 | 24.3 | 43.5 | 24.5 | 19.8 | 48.3 | 61.2 |
| Insulation resistance (1000V) | Number of Fails /10EA | 1EA (OK) | JEA (OK) | 1EA (OK) | 10EA (NG) | 8EA (NG) | 10EA (NG) | 6EA (NG) | 2EA (OK) | 10EA (NG) |

| | | | | | | | | | | |
|---|---|---|---|---|---|---|---|---|---|---|
| * Insulation resistance: OK-number of fails is 1 or less; NG-number of fails is 2 or more. | | | | | | | | | | |

### Experimental Example 1 - Heat-Sealing Strength

The pouch films manufactured in the Examples and Comparative Examples were folded in half and compressed to a CPP retention rate of 70% under conditions of 200°C, 0.2 MPa, and 2 sec, and then cut to a width of 15 mm to prepare samples. Under temperature conditions of room temperature and 60°C, respectively, a CPP-to-CPP interface of the prepared sample was fixed at an initial jig gap of 30 mm, and then separated at 180° at a peel rate of 50 mm/min to measure a heat-sealing strength between the two layers. As a heat-sealing strength measuring device, an AGS-1kNX model (UTM) manufactured by SHIMADZU, Japan, was used for evaluation.

### Experimental Example 2 - Insulation Resistance

After the pouch samples of the examples and comparative examples were formed to dimensions of 30 mm × 40 mm × 5 mm, dummy cells were manufactured through side sealing and tab sealing based on 2 mL of an electrolyte. The number of samples was 10 for each sample, and after the dummy cells were manufactured and stored at 60°C for 24 hours, an insulation resistance was measured when a voltage of 1 kV was applied. In this case, when the voltage was applied, the pouch was determined to be N.G. when an insulation resistance of the pouch was 100 MΩ or less.

Referring to Table 1, it may be identified that, in the case of the pouch films manufactured according to the manufacturing method of the present disclosure, insulation resistance characteristics are at a significantly excellent level while maintaining heat-sealing strength and heat-sealing strength reduction rate characteristics at excellent levels.

On the other hand, in the case of the Comparative Examples that did not satisfy the length ratio of the mixing part and/or the content and average particle diameter of the polyolefin-based elastomer according to the manufacturing method of the present disclosure, the heat-sealing strength and heat-sealing strength reduction rate were at inferior levels, and it may be identified that, even when the heat-sealing strength and heat-sealing strength reduction rate were at equivalent levels, the insulation resistance characteristics were at significantly inferior levels. That is, in the case of the Comparative Examples, it may be identified that it is difficult to maintain the heat-sealing strength, heat-sealing strength reduction rate, and insulation resistance characteristics all at excellent levels.
10: supply part
20: melting part
30: mixing part
40: measuring part
10-1: supply part of conventional extruder
20-1: melting part of conventional extruder
30-1: mixing part of conventional extruder
40-1: measuring part of conventional extruder

### Acknowledgement

The present disclosure is a result achieved through support of the following project.
[Project Identification Number] 1415185612
[Project Number] 20022450
[Ministry] Ministry of Trade, Industry and Energy
[Project management (professional) institution] Korea Planning & Evaluation Institute of Industrial Technology (KEIT)
[Research business] Development of material and part technology (Top company)
[Research project] Development of next-generation secondary battery pouch that may implement twice or more high adhesive strength (60°C)
[Contribution rate] 1/1
[Project implementation organization] Youlchon Chemical Co., Ltd
[Research Period] 2023.01.01 to 2023.12.31

## Claims

1. A method for manufacturing a pouch film, the method comprising:
(S1) manufacturing a sealant layer by supplying a polyolefin-based resin and a polyolefin-based elastomer to an extruder;
(S2) laminating the sealant layer on one surface of a barrier layer including aluminum; and
(S3) laminating an outer layer on an opposite surface of the barrier layer,
wherein the polyolefin-based elastomer is supplied in an amount of 7 wt% or more and 30 wt% or less based on a total resin of the sealant layer, and
wherein the extruder includes a mixing part, and a length of the mixing part is 6% or more and 10% or less based on a total length of the extruder.

2. The method of claim 1, wherein S1 includes dispersing the polyolefin-based elastomer in the polyolefin-based resin by the mixing part.

3. The method of claim 2, wherein an average particle diameter of the polyolefin-based elastomer dispersed in the polyolefin-based resin is 30 nm or more and 150 nm or less.

4. The method of claim 1, wherein S2 is performed by an extrusion lamination method.

5. The method of claim 4, further comprising:
an extrusion lamination coating layer including a polyolefin-based resin between the barrier layer and the sealant layer.

6. The method of claim 1, wherein the polyolefin-based resin includes at least one selected from the group consisting of polyethylene, polypropylene, polybutylene, a copolymer derived from a monomer derived from ethylene and/or propylene and a monomer derived from an alpha-olefin, and a mixture thereof.

7. The method of claim 1, wherein the polyolefin-based elastomer is supplied in an amount of 10 wt% or more and 20 wt% or less based on a total resin of the sealant layer.

8. A pouch film comprising:
an outer layer, a barrier layer including aluminum, and an inner layer laminated sequentially,
wherein the inner layer includes a first sealant layer disposed on the barrier layer, and a second sealant layer disposed on the first sealant layer,
wherein each of the first sealant layer and the second sealant layer independently includes a matrix resin, and a domain resin included in the matrix resin,
wherein a content of the domain resin in the second sealant layer is 10 wt% or more and 20 wt% or less based on a total resin of the second sealant layer, and
wherein an average particle diameter of the domain resin in the second sealant layer is 30 nm or more and 150 nm or less.

9. The pouch film of claim 8, wherein the average particle diameter of the domain resin in the second sealant layer is 50 nm or more and 125 nm or less.

10. The pouch film of claim 8, wherein the matrix resin includes a polyolefin-based resin.

11. The pouch film of claim 8, wherein the domain resin includes at least one material selected from the group consisting of an ethylene-propylene copolymer (EPR)-based elastomer resin, an ethylene-butene copolymer (EBR)-based elastomer resin, an ethylene-hexene copolymer (EHR)-based polyolefin elastomer resin, an ethylene-octene copolymer (EOR)-based polyolefin elastomer resin, a propylene-butene copolymer (PBR)-based polyolefin elastomer resin, a propylene-hexene copolymer (PHR)-based polyolefin elastomer resin, a propylene-octene copolymer (POR)-based polyolefin elastomer resin, an LLDPE-based elastomer resin, and a thermoplastic polyurethane (TPU) elastomer resin.

12. The pouch film of claim 8, wherein the outer layer includes polyethylene terephthalate.

13. The pouch film of claim 8, wherein a heat-sealing strength under Condition 1 is 130 N/15 mm or more, and a heat-sealing strength reduction rate according to Equation 1 is 35% or less:
[Condition 1]
A pouch film is heat-sealed between sealant layers under conditions of 200°C, 0.2 MPa, and 2 seconds, cut to a width of 15 mm to prepare a specimen, and the specimen is fixed between two jigs of a universal testing machine (UTM) under room-temperature conditions with an initial jig gap of 30 mm, after which a peel strength at a peel angle of 180° is measured at a peel rate of 50 mm/min [Equation 1] 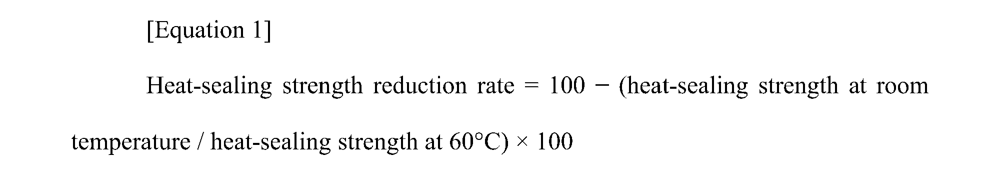 Heat-sealing strength reduction rate = 100 - (heat-sealing strength at room temperature / heat-sealing strength at 60°C) × 100 wherein in Equation 1,
the heat-sealing strength at room temperature is the peel strength measured under Condition 1, and
wherein the heat-sealing strength at 60°C is a peel strength measured at a peel angle of 180° and a peel rate of 50 mm/min after a pouch film is heat-sealed between sealant layers under conditions of 200°C, 0.2 MPa, and 2 seconds, cut to a width of 15 mm to prepare a specimen, and the specimen is fixed between two jigs of a universal testing machine (UTM) under a temperature condition of 60°C with an initial jig gap of 30 mm.

14. A pouch type secondary battery case including the pouch film of claim 8.
